# EUROPEAN PATENT SPECIFICATION

(11) **EP 0 659 519 B1**
(45) Date of publication and mention of the grant of the patent: **19.09.2001**
(21) Application number: 94120289.7
(22) Date of filing: 21.12.1994
(51) Int. Cl.: B23K 35/363, F28F 19/06, B23K 101/14

(54) **Flux for brazing, heat exchanger brazed thereby, and method for assembling heat exchanger**
Hartlotflussmittel, damit hergestellte Wärmetauscher und Verfahren zum Zusammenbau eines Wärmetauschers
Flux pour brasage, échangeur de chaleur ainsi brasé et procédé pour l'assemblage d'un échangeur de chaleur

(30) Priority: 24.08.1994 JP 19939794; 24.12.1993 JP 32647393
(43) Date of publication of application: 28.06.1995
(73) Proprietor: DENSO CORPORATION, Kariya-City Aichi-Pref. 448 (JP)
(72) Inventor: Kato, Masayo, Ama-gun, Aichi (JP); Negura, Kenji, Kariya-shi, Aichi (JP); Hasegawa, Yoshiharu, Obu-shi, Aichi (JP); Fukuda, Sunao, Handa-shi, Aichi (JP); Yamamoto, Michiyasu, Chiryu-shi, Aichi (JP)
(74) Representative: Klingseisen, Franz, Dipl.-Ing.

(56) References cited:
- EP-A- 0 131 444
- US-A- 3 971 501
- US-A- 4 831 701
- PATENT ABSTRACTS OF JAPAN vol. 11 no. 102 (M-576) ,31 March 1987 & JP-A-61 249700 (HITACHI) 6 November 1986,
- PATENT ABSTRACTS OF JAPAN vol. 7 no. 283 (M-263) ,16 December 1983 & JP-A-58 159995 (HITACHI SEISAKUSHO) 22 September 1983,
- CHEMICAL ABSTRACTS, vol. 106, no. 26, 29 June 1987 Columbus, Ohio, US; abstract no. 218256, page 280; & JP-A-61 293 699 (TOYOTA) 24 December 1986
- DATABASE WPI Week 8607 Derwent Publications Ltd., London, GB; AN 86-045121 & JP-A-60 262 957 (HITACHI) , 26 December 1985

## Description

### BACKGROUND OF THE INVENTION

### 1. Field of the Invention

The present invention relates to a flux used for brazing aluminum or an aluminum based alloy.

### 2. Description of Related Art

In the production of a heat exchanger which includes parts such as heat exchanging pipes and fins made from aluminum or an aluminum alloy, brazing the heat exchanging pipes and the fins is usually done using a flux based on a fluorine compound, such as KF-AlF₃, which is advantageous in its anti-corrosion capability.

When a fluorine based flux is used for brazing fins onto a heat exchanging tube which is, in particular, made of aluminum or aluminum alloy material, the tube is subjected to flame spraying of a zinc material to create an anti-corrosion coating on the outer surface of the heat exchanging tube in order to prevent any pitting corrosion from occurring. Furthermore, the fins are made of a material, which is, along the galvanic series, located at a position which is higher in the series than the position of the material of the heat exchanging tube. In other words, the material used for the fin has a potential higher than that of the material used for the heat exchanging tube, so that a sacrificial corrosion effect takes place, which causes the fins to be corroded in place of the tube.

However, even if the heat exchanging pipes, on which zinc material is flame sprayed, are used, it is difficult to ensure that a value of the potential, at the locations where the fins are brazed to the tube, is lower than a value of the potential at the heat exchanging tube. As a result, selective corrosion may occur at the locations where the fins are brazed to the tube. When the heat exchanging device is used in a very corrosive environment, such a selective corrosion may eventually cause the fins to separate from the tube. However, if a heat exchanging tube which was not zinc flame sprayed is employed, it is very difficult to prevent pitting corrosion from occurring at locations other than the locations where the fins are brazed to the tube.

The Japanese Unexamined Patent Publication No. 61-293699 discloses a technique in which a flux based on KF-ZnF₂ is employed to form a zinc diffusion layer on the surface of the aluminum based material, so that selective corrosion is prevented from occurring even at the location where the brazing is done, thereby producing a heat exchanger with good anti-corrosion reliability. This prior art is, however, defective in that the brazing operation in such a prior art is not very effective, when executed in an industrial atmospheric brazing furnace. Namely, from the practical view point, the above-mentioned difficulty remains unsolved.

EP-A-131 444 discloses a flux for brazing together metal members of a heat exchanger made of aluminum alloys which flux consists essentially of 25-40% KF, 38-54% AlF₃ and 3-30% ZnF₂. Likewise JP-A-58 159995, JP-A-61 249700 and JP-A-61 293699 disclose brazing fluxes for aluminum alloys containing KF, AlF₃ and ZnF₂, having a composition which - like that of the flux of EP-A-131 444 - is different from the composition of the flux of the present invention.

### SUMMARY OF THE INVENTION

An object of the present invention is to provide a flux, capable of preventing pitting corrosion from occurring on a tube, while preventing selective corrosion from occurring at locations where fins are brazed to the tube.

Another object of the present invention to provide a flux, capable of providing increased reliability as well as an enhanced applicability to industrial purposes.

According to the invention, a flux for brazing of aluminum based material is provided, the flux consisting of x (wt%) of KF, y (wt%) of ZnF₂, and z (wt%) of AlF₃ wherein, when a ternary equilibrium diagram is employed to show the ratio between the components of the flux by a coordinate point (x, y, z) in the diagram, the ratio of the components is located inside the polygonal area delimited by coordinate points p(46, 40, 14), s(32, 40, 28) and j(35, 30, 35).

Accordingly a heat exchanger can be prepared by:
providing a heat exchanging tube made of aluminum based alloy in which a medium to be subjected to a heat exchange flows, the heat exchanging tube having sections which are spaced from each other;
providing heat exchanging fins, each constructed of a core plate made of aluminum alloy, and a pair of outer platings made of aluminum alloy, between which the core plate is brazed so as to create a composite sheet;
arranging the fins in spaces between the sections of the heat exchanging tube so that the fins contact the outer surface of the sections of the heat exchanging tube, an outside air flow contacting the fins for promoting a heat exchange between the fins and the air flow, and;
brazing said tube and fins using a flux made of aluminum based material, consisted of x (wt%) of KF, y (wt%) of ZnF₂, and z (wt%) of AlF₃ wherein, when a ternary equilibrium diagram is employed to show the ratio between the components of the flux by a coordinate point (x, y, z) in the diagram, the ratio of the components is located inside the polygonal area delimited by coordinate points p(46, 40, 14), s(32, 40, 28) and j(35, 30, 35).

The flux according to the present invention allows a zinc diffusion layer to be created on the aluminum based material when brazing is executed, so that a value of the potential of the brazed portion is higher than a value of the potential of the position of the fins, thereby preventing selective corrosion from occurring. Furthermore, pitting corrosion is prevented from occurring even at location on the tube other than the portion where the fins are brazed to the tube. Thus, a reliable brazing operation can be obtained even on an industrialized scale.

### BRIEF EXPLANATION OF ATTACHED DRAWINGS

Fig. 1 is a schematic perspective view of a heat exchanger.

Fig. 2 is an enlarged partial perspective view of a part of Fig. 1.

Fig. 3 is a cross sectional view of a fin illustrating the cladded structure thereof.

Fig. 4-A is a schematic perspective view illustrating how a test piece is constructed.

Fig. 4-B is similar to Fig. 4-A, but illustrates how the brazing material fills the gap in the test piece.

Fig. 4-C is similar to Fig. 4-A, but illustrates a filling length 1.

Fig. 5 shows a weight percent ratio of KF, ZnF₂ and AlF₃ of the flux according to the present invention in a ternary equilibrium diagram.

Fig. 6 shows a result of filling length in the ternary equilibrium diagram.

Fig. 7 shows a result of diffusion length in the ternary equilibrium diagram.

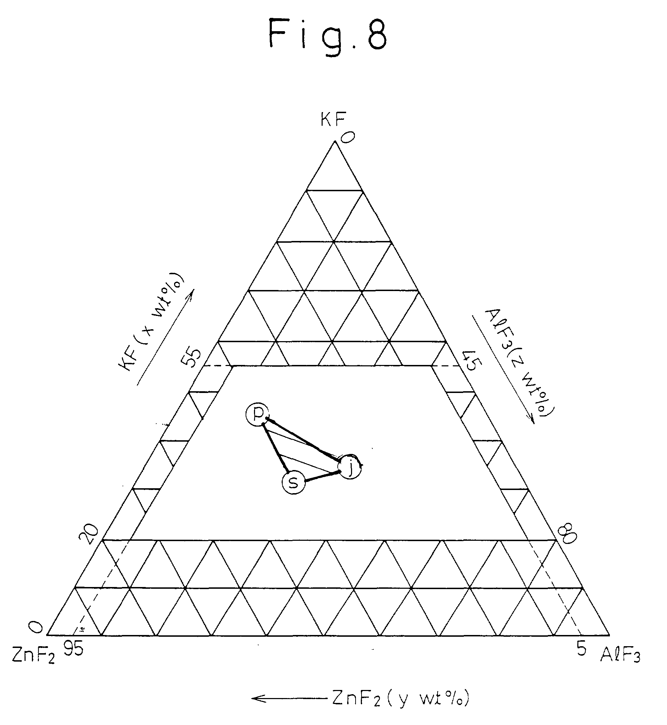

Fig. 8 shows a desired range of ratios between the components of the flux according to the present invention in the ternary equilibrium diagram.

Fig. 9 shows an enlarged cross sectional view of the fin according to the present invention illustrating how the flux is attached to the surface of the tube.

### DESCRIPTION OF PREFERRED EMBODIMENTS

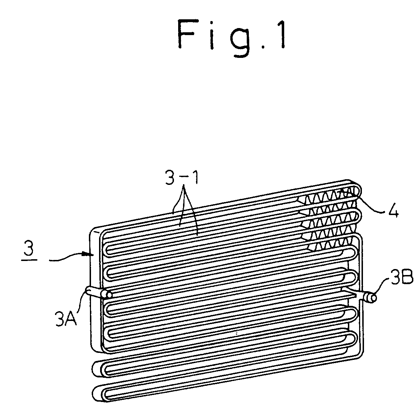

In Fig. 1, reference numeral 1 denotes a condenser as a heat exchanger. Such a condenser is, for example, used in an air conditioning system, and includes a heat exchanging tube 3 basically formed as a serpentine shape having tube sections 3-1 vertically spaced, and fins 4 arranged along spaces between the tube sections 3-1 so that these fins 4 contact the outer surfaces of the tube sections 3-1. In the shown embodiment, the fins 4 are arranged in the spaces between the heat exchanging tube sections 3-1 located on an upper part of the heat exchanger 1. However, another arrangement, where the fins 4 are arranged in the spaces between the heat exchanging tube sections 3-1 along the entire height of the heat exchanger 1, is also possible. In Fig. 1, the heat exchanging tube 3 includes an inlet 3A for an introduction of the medium such as a refrigerant to be cooled and an outlet 3B for removing the medium after it is cooled.

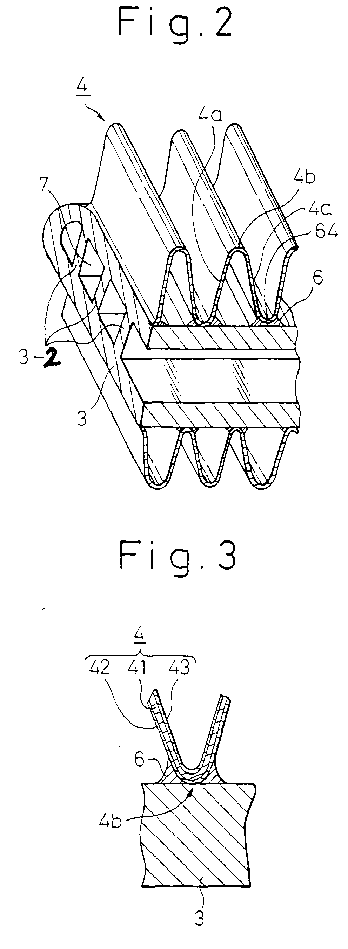

As shown in Fig. 2, the tube 3 is made of a plate material which is bent and seamed by welding along longitudinal edges to form a flattened pipe shape. The pipe 3 is formed with inner longitudinal ribs 3-2 for dividing the space inside the tube into passageways 7 for the medium to be cooled.

The fin 4 forms a corrugated shape as shown in Fig. 2, which is constructed by flat sections 4a connected by curved sections 4b, which are contacted with the outer surfaces of the tube 3 and brazed thereto by means of a brazing material 6. As shown in Fig. 3, the fin 4 is made as a clad member with outer platings 42 and 43 and a core 41 sandwiched between the outer platings 42 and 43.

A flux according to the present invention used for brazing will now be explained. In order to obtain the flux according to the present invention, a mixture of x' weight percent of KF (potassium fluoride), y' weight percent of ZnF₂·4H₂O (hydrated zinc fluoride) and z'(=100-x'-y') weight percent of AlF₃·3H₂O (hydrated aluminum fluoride) was prepared. A suitable amount of a water was added to 100 grams of this mixture, and the result was subjected to agitation to obtain a mixture in a desirably and uniformly mixed state. Then, the mixture was dried at the temperature of 100°C for 2 hours to obtain a solid. The solid was pulverized to obtain the flux according to the present invention.

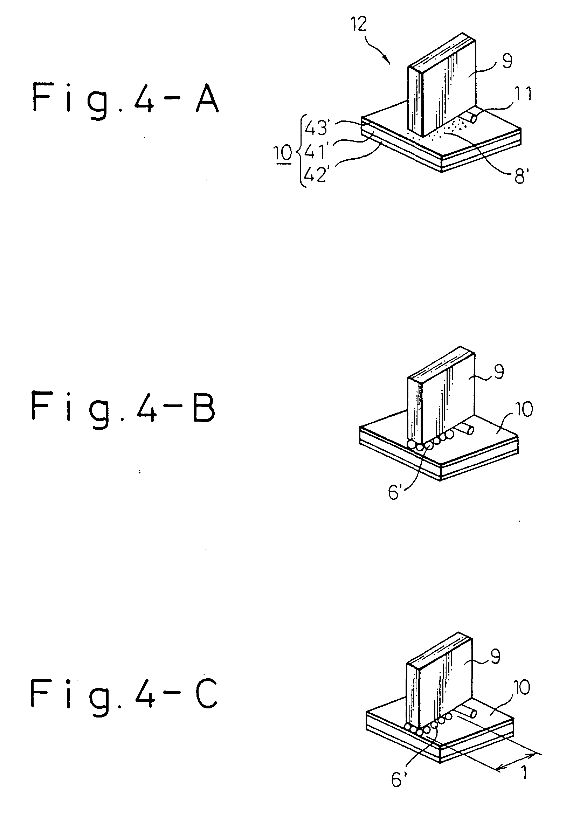

The flux according to the present invention, as employed for brazing a heat exchanger, was evaluated as follows. In this case, the heat exchanging tube 3 in Fig. 1 was made from an aluminum based alloy including 0.5% weight percent of Cu. The corrugated fin 4 was made as a clad sheet (brazing sheet) as shown in Fig. 3, the core member 41 was made from an aluminum based alloy including 1.2 weight percent of Mn and 1.5 weight percent of Zn; the plating 42 was made of aluminum based alloy (A4343) including 7.5 weight percent of Si, and; the plating 43 is also made of aluminum based alloy (A4343) including 7.5 weight percent of Si. From these parts, a test piece 12 of inverse "T" shape as shown in Fig. 4-A was, thus, prepared. Namely, the test piece 12 was constructed of an upright section 9 made from the same material for constructing the tube 3, i.e., from the aluminum based alloy including 0.5% weight percent of Cu, of length of 3 cm and height of 2 cm, and by a horizontal section 10 made from the same material for constructing the fin 4, i.e., a core member 41' made from an aluminum based alloy including 1.2 weight percent of Mn and 1.5 weight percent of Zn, and an outer plating 42' and outer plating 43' made of aluminum based alloy including 7.5 weight percent of Si, of length of 3 cm and width of 2 cm. These sections 9 and 10 were degreased by an organic solvent. Then, the section 10 made from the material for constructing the fin was immersed into a solution, including the pulverized flux of 25 gram per water of 100 gram, and, then was dried, so that 2 to 5 g/m² of the flux was attached to the surface of the section 10. Then, on the section 10 to which the flux is attached, the section 9, made by the same material as that of the tube, is arranged via a clearance piece 11, with a diameter φ of 1.6 mm made of SUS304, to create an assembly to be subjected to brazing. In Fig. 4-A, a portion of the flux on the section 10 to which a brazing is executed is designated by a reference numeral 8'. This assembly was introduced into a nitrogen atmospheric furnace and was heated at a temperature of 610°C for 11 minutes to execute a brazing, so that the sections 9 and 10 were connected to each other, by means of the brazed portion 6', so that the test piece 12 of an inverse T shape was produced, as shown in Fig. 4-B. It should be noted that the brazing is done using a furnace of a conventional industrial type in an atmosphere with a dew point of -40°C and an oxygen density of 30 to 50 ppm. As a comparative example, for a test piece of a similar inverse T shape made by using a conventional type flux, a similar test was also done. Furthermore, the brazing performance as obtained is evaluated by means of a length 1 of the brazing portion 6' which fills the gap between the pieces 9 and 10 as shown in Fig. 4-C and by means of the thickness of the diffused zinc material in the plate 9 for constructing the heat exchanging tube 3.

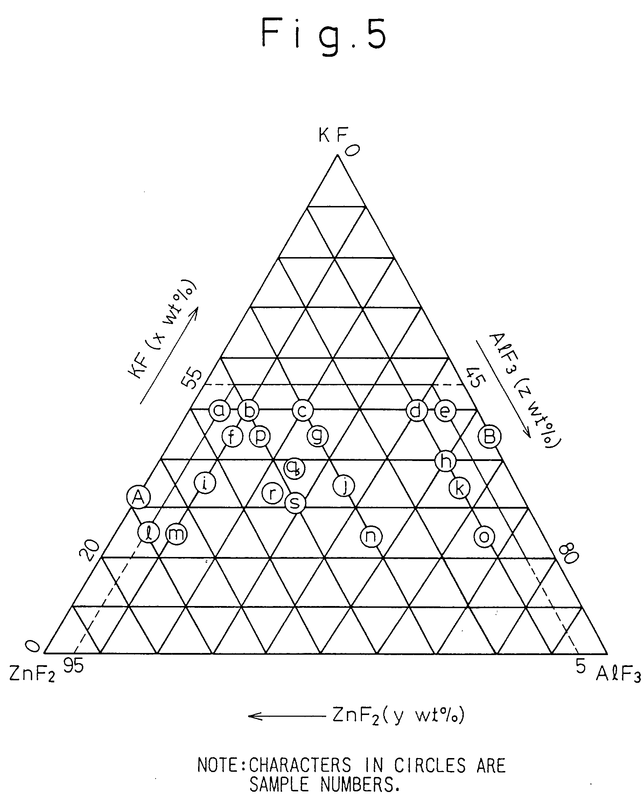

Now, the results of the evaluation of the brazing performance will be explained. Various test samples of the mixture of KF, ZnF₂, and AlF₃ are produced by changing the ratios of the components in mixture of KF (x wt%), ZnF₂ (y wt%), and AlF₃ (z(=100-x-y) wt%). Namely, in the ternary equilibrium diagram in Fig. 5, the left hand inclined axis shows the weight percent (x%) of KF, the horizontal axis shows the weight percent (y%) of ZnF₂, and the right hand inclined axis shows the weight percent (z%) of AlF₃. Thus, a weight ratio between KF, ZnF₂, and AlF₃ of the samples are expressed by coordinate points (x, y, z) in the diagram. Thus, in Fig. 5, the locations of the ratio of the samples in the ternary equilibrium diagram are designated by circled alphabetic characters a to of q. In Fig. 5, circled characters A and B show the locations of the flux mixtures of the prior art. Namely, the flux A located on the left handed inclined axis consists 32 wt% of KF and 68 wt% of ZnF₂. The flux B consists of 45 wt% of KF and 55 wt% of AlF₃.

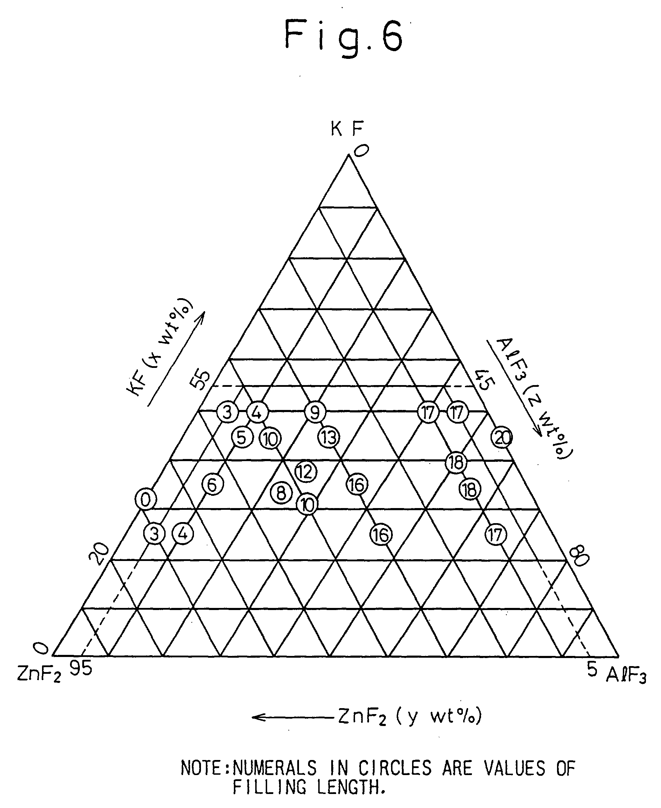

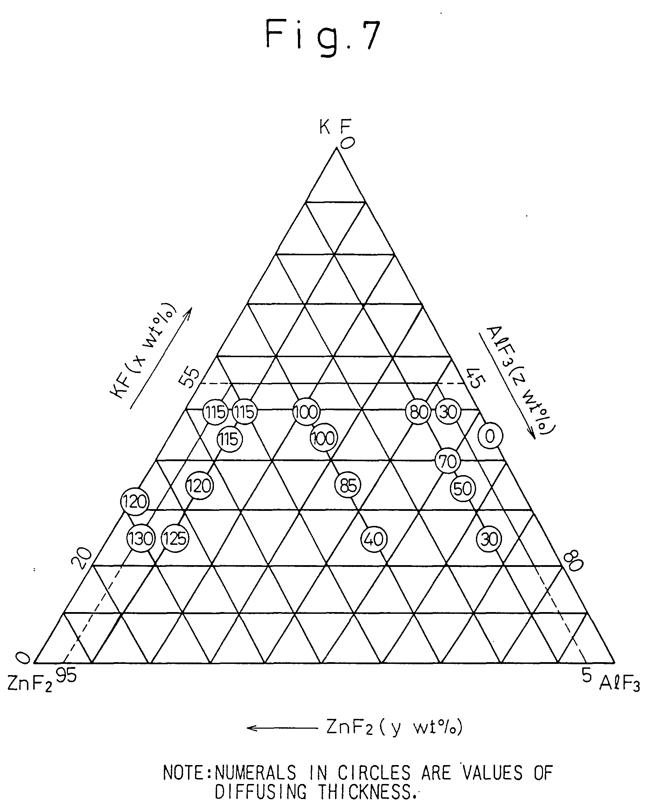

In order to evaluate the brazing performance, Fig. 6 shows, at the locations corresponding to the samples in Fig. 5, in corresponding circles, the values in mm of the gap filling lengths 1 in Fig. 4-C, while Fig. 7 shows, at the locations corresponding to the samples in Fig. 5, in corresponding circles, values in µm of the zinc layer diffusion thicknesses. In order to obtain a desired strength of the brazing, it is required that the gap filling length 1 (Fig. 4-C) is equal to or longer than 10 mm in order to obtain a desired brazing strength, and that the zinc layer diffusion thickness is equal to or more than 70 µm. Therefore, a diffusion thickness of 80 µm is desirable in order to prevent the fins from being separated if used in a highly corrosive environmental condition. In view of this, it is concluded that the samples at the locations p, s and j, and samples located inwardly thereof in the diagram can satisfy the above-mentioned requirement as to the gap filling length 1 as well as the zinc layer diffusion thickness. In other words, any flux consisted of x wt% of KF, y wt% of ZnF₂, and z wt% of AlF₃, and can obtain a desired result if it has a coordinate point (x, y, z), in the ternary equilibrium diagram, which is located in the polygonal area described by the coordinate points p, s and j. The following table shows, for the fluxes at the locations d, p, s, j and h, the weight ratios between KF, ZnF₂, and AlF₃. Furthermore, a desired construction for preventing the fins from being separated is in a range of the filling length of 10 mm or more and a range of the zinc diffusion thickness of 80 µm or more.

**Table 1**

| Test Numbers | d*) | p | s | j | h*) |
|---|---|---|---|---|---|
| KF | 50 | 46 | 32 | 35 | 40 |
| ZnF₂ | 10 | 40 | 40 | 30 | 10 |
| AlF₃ | 40 | 14 | 28 | 35 | 50 |

| | | | | | |
|---|---|---|---|---|---|
| *) not according to the invention | | | | | |

In view of the above, the flux according to the present invention can be used in an industrial brazing atmospheric furnace and can form a zinc diffusion layer. In the above embodiment, some examples of single compounds are explained. However, any mixture of the compounds x% of KF, y% of ZnF₂ and z% of AlF₃ gives a desired result if the coordinate point (x, y, z) of the compound is located in the area delineated by point p(46, 40, 14), point s(32, 40, 28) and point j (35, 30, 35).

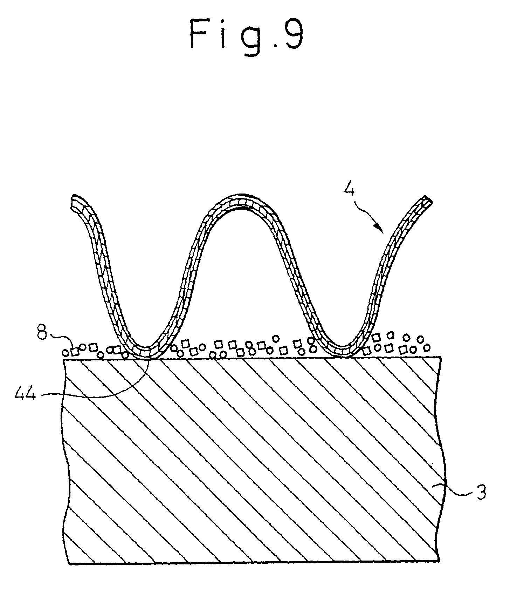

A heat exchanger, as shown in Fig. 1, was produced using a flux according to the present invention. In this case, the heat exchanging tube 3 was made from an aluminum alloy including 0.5% of Cu. Then, the core member 41 made of an aluminum alloy including 1.2% of Mn and 1.5% of Zn, the outer plating 42 made of aluminum based alloy (A4343) including Si of 7.5%, and the outer plating 43 made of aluminum based alloy (A4343) including Si of 7.5% were prepared. These platings were arranged so that the core member 41 is cladded between the inner and outer platings 42 and 43 to obtain a composite plate. The plate was then subjected to a stamping process to obtain fins 4 of a corrugated shape. The tube 3 was also subjected to a stamping process to obtain the desired serpentine shape. The corrugated shaped fins 4 were, as shown in Fig. 1, inserted into spaces between the parallel sections 3-1, so that the fins 4 were provisionally assembled to the tube 3. An aqueous solution was prepared by adding, to 950 gram of water, 50 gram of the flux according to the present invention. The aqueous solution was sprayed onto the provisional assembly and dried in such a manner that, after drying, 2 to 5 grams of the flux is attached to the assembly. Fig. 9 illustrates, schematically, an arrangement of the flux 8 on the surface of the heat exchanger according to the present invention. The assembly was then subjected to the heating in a nitrogen atmosphere furnace at a temperature of 610°C for 11 minutes, so as to braze the assembly, thereby obtaining a completed heat exchanger. The furnace for the brazing was a conventional industrial type. The atmosphere in the furnace had a dew temperature of -40 degree centigrade, and the density of oxygen was 30 to 50 ppm. A heat exchanger, as a comparative example, was produced by using a tube 3, on which a zinc was flame sprayed, while a flux of a conventional construction was used. Then, measurements of spontaneous electrode potential of the materials of the tube 3 and fins 4 constructing the heat exchanger 1 were carried out. The measurement was done using electrodes constructed of Ag/AgCl in an electrolyte solution of 5% of NaCl with pH of 7.0, and the obtained result is shown in a Table 2.

**Table 2**

| Sample | 1 | 2 | 3 | 4 |
|---|---|---|---|---|
| | Al-0.5%Cu | Al-1.2%Mn-1.5%Zn | Al-0.5%Cu | Al-0.5%Cu |
| | No Zinc Spray | No Zinc Spray | With Zinc Spray | With Flux (Present invention) |
| Spontaneous Electrode Potential | -660 mV | -720 mV | -890 mV | -700 mV to -850 mV |

In view of the result of the evaluation in the Table 2, the spontaneous electrode potential (-720 mV) of the aluminum based alloy including 1.2% of Mn and 1.5% of Zn (sample 2) is lower than that of the aluminum based alloy (-660 mV sample 1) including 0.5% of Cu with no zinc flame sprayed layer and is higher than that of the aluminum based alloy (-890 mV sample 3) including 0.5% of Cu with no zinc flame sprayed layer. Furthermore, the selection of the flux according to the present invention is such that the spontaneous electrode potential of the aluminum based alloy including 0.5% of Cu brazed by using the flux according to the present invention (sample 4) is located between the spontaneous electrode potential of the aluminum based alloy (-660 mV sample 1) including 0.5% of Cu without zinc sprayed layer and the spontaneous electrode potential of the aluminum based alloy (-720 mV sample 2) including 1.5% of Mn and 1.5% of Zn with no zinc sprayed layer. In other words, according to the present invention, it is possible to obtain a value for the spontaneous electrode potential of the surface of the zinc diffusion layer on the surface of the tube created by using the flux according to the present invention, which is located between the value of the spontaneous electrode potential of the tube (Al-0.5% Cu with no zinc sprayed layer) and the value of the spontaneous electrode potential of the fin (Al-1.2% Mn-0.5% Zn with no zinc sprayed layer). In other words, in the heat exchanger, when brazing is done by using the flux according to the present invention, the potential at the brazed portion becomes to be higher than that of the fin, which is effective for preventing the brazed portion from being subjected to selective corrosion. Thus, any occurrence of selective corrosion and a resultant separation of the fins thereby can be prevented even if the heat exchanger is used in a very corrosive area.

Now, a result of a corrosion test done according to the CASS test (accelerated salt spray test with acetic acid and cupric chloride) stipulated under Japanese Industry Standard (JIS) 8681, is explained. The result is shown in the following table.

**Table 3**

| Samples | | Flux | CASS test of 240 hours | |
|---|---|---|---|---|
| Tube | Fin | | Separation | Pitting Corrosion |
| Al-0.5%Cu No Zinc Spray (Example 1) | a. Al-1.2%Mn -1.5%Zn | KF/ZnF₂/AlF₃*) | No | Below 0.1 mm |
| | | 34/56/10 | | |
| | b. Al-7.5%Si | | | |
| Al-0.5%Cu No Zinc Spray (Example 2) | a. Al-1.2%Mn -1.5%Zn | KF/ZnF₂/AlF₃ | No | Below 0.1 mm |
| | | 38/37/25 | | |
| | b. Al-7.5%Si | | | |
| Al-0.5%Cu With Zinc Spray (Comparative Example 1) | a. Al-1.2%Mn -1.5%Zn | KF/AlF₃ | Yes | Below 0.1 mm |
| | | 45/55 | | |
| | b. Al-7.5%Si | | | |
| Al-0.5%Cu No Zinc Spray (Comparative Example 2) | a. Al-1.2%Mn -1.5%Zn | KF/AlF₃ | No | 0.4 mm |
| | | 45/55 | | |
| | b. Al-7.5%Si | | | |

| | | | | |
|---|---|---|---|---|
| *not according to the invention | | | | |

In Table 3, "no separation" means that any separation of the fins from the tube at the brazed portions did not occur, i.e., a good brazing condition was maintained. Contrary to this, "separation" means that a separation of the fins from the tube at the brazed portions occurred, i.e., a brazing condition was poor. Furthermore, in the column for pitting corrosion, the depth of the holes, generated at a location on the tube other than the portions where the fins are brazed to the tube, is shown.

It is clear from the above table that, in Comparative Example 1, where a tube with zinc spray is used, and to which the fins is brazed by using prior art flux based on KF and AlF₃, a separation of the fins occurred after the CASS test. Contrary to this, in Example 2, where a tube with no zinc spray is used, to which the fins are brazed using the flux according to the present invention, no separation of the fins occurred after the CASS test. Furthermore, in the Comparative Example 2, where a tube with no zinc spray is used, to which the fins are brazed using a prior art flux based on KF and AlF₃, pitting corrosion of 0.4 mm is occurred. Contrary to this, in Example 2, where a tube with no zinc spray is used, to which the fins are brazed by using the flux according to the present invention, the pitting corrosion was only 0.1 mm, as compared to the result of the pitting corrosion test (0.1 mm) in Comparative Example 1, where a tube with a zinc spray is used and to which the fins are brazed using a prior art flux.

It has heretofore been believed that the use of a tube with no zinc sprayed layer makes it difficult to prevent pitting corrosion occurring at a location of the tube other than portions to which the fins are connected without causing a separation of the fins. However, according to the present invention, it becomes possible to prevent such pitting corrosion from being generated at locations of the tube other than portions to which the fins are connected without causing any separation of the fins.

In short, according to the present invention, a flux which is suitable for brazing an aluminum or an aluminum based alloy is provided, and the flux is suitable for use in industry, since it is capable of preventing any occurrence of pitting corrosion on the tube, without generating a selective corrosion at the locations where the fins are brazed to the tube. In this case, in order to prevent separation of the fins, a diffusion distance of the zinc of 80 µm or more is desirable. Such a value is desirable since it can provide a high resistance to the selective corrosion at the location where the tube . and fins are brazed, while preventing any pitting corrosion from being occurred.

## Claims

1. A flux for brazing of aluminum based material, consisting of x (wt%) of KF, y (wt%) of ZnF₂ and z (wt%) of AlF₃ wherein, when a ternary equilibrium diagram is employed to show the ratio between the components of the flux by a coordinate point (x, y, z) in the diagram, the ratio of the components is located inside the polygonal area delimited by coordinate points p(46, 40, 14), s(32, 40, 28) and j (35, 30, 35).

## Patentansprüche

1. Flußmittel für das Hartlöten von Material auf Aluminiumbasis, bestehend aus x (Gew.%) KF, y (Gew.%) ZnF₂ und z (Gew.%) AlF₃, worin bei Verwendung eines temären Gleichgewichtsdiagramms für die Darstellung des Verhältnisses zwischen den Komponenten des Flußmittels durch einen Koordinatenpunkt (x, y, z) in dem Diagramm das Verhältnis der Komponenten sich innerhalb der polygonalen Fläche, die durch die Koordinatenpunkte p (46, 40, 14), s (32, 40, 28) und j (35, 30, 35) begrenzt wird, befindet.

## Revendications

1. Flux de brasage d'un matériau à base d'aluminium, constitué de x (% poids) de KF, y (% poids) de ZnF₂ et z (% poids) de AlF₃ dans lequel, lorsqu'un diagramme d'équilibre ternaire est employé pour montrer le rapport entre les composants du flux par un point de coordonnées (x, y, z) dans le diagramme, le rapport des composants est situé à l'intérieur de la région polygonale délimitée par les points de coordonnées p(46, 40, 14), s(32, 40, 28) et (35, 30, 35).
